# EUROPÄISCHE PATENTSCHRIFT

(11) **EP 0 445 397 B1**
(45) Veröffentlichungstag und Bekanntmachung des Hinweises auf die Patenterteilung: **29.12.1993**
(21) Anmeldenummer: 90124178.6
(22) Anmeldetag: 14.12.1990
(51) Int. Cl.: B29C 47/34, H01B 13/14

(54) **Verfahren und Vorrichtung zur Umhüllung von Seilen oder eines aus einer Vielzahl von Leitern verdrillten Kabels**
Method and apparatus for covering cables or twisted electrical cables comprising a plurality of conductors
Procédé et installation pour le revêtement de câbles ou câbles électriques toronnés, comprenant une pluralité de conducteurs

(30) Priorität: 08.02.1990 DE 4003735
(43) Veröffentlichungstag der Anmeldung: 11.09.1991
(73) Patentinhaber: PAUL TROESTER MASCHINENFABRIK, D-30519 Hannover (DE)
(72) Erfinder: Baumgarten, Wilfried, Dipl.-Ing., W-3017 Pattersen (DE)
(74) Vertreter: Junius, Walther, Dr.

(56) Entgegenhaltungen:
- EP-A- 0 405 066
- DE-A- 1 933 043
- DE-A- 2 726 767
- DE-A- 2 833 702
- DE-C- 609 652
- JP-A-63 252 320

## Beschreibung

Die Erfindung betrifft die Umhüllung von Seilen oder eines aus einer Vielzahl von Leitern verdrillten Kabels mit einfacher oder mehrfacher Schicht aus vernetzbaren Thermoplasten oder einer Elastomerschicht sowie deren Vulkanisation und/oder Vernetzung, bei der man das verdrillte Seil oder Kabel durch eine die Umhüllungsschicht aufbringende Extrusionsvorrichtung führt, und bei dem man anschließend das umhüllte Seil oder Kabel durch eine Vulkanisier- oder Vernetzungsvorrichtung hindurchführt und es dabei um seine Achse ständig dreht, indem man eine Drehvorrichtung in der Anlage am Seil oder Kabel angreifen läßt.

Diese Art des Vorgehens bei der Ummantelung eines Kabels und der anschließenden Vulkanisation und Vernetzung der Isolierschicht des Kabels ist aus der DE-PS 27 26 767 bekannt geworden, bei der das Kabel während des Isolierungs- bzw. Vernetzungsprozesses um seine Längsachse durch eine am Kabelmantel angreifende Drehvcrrichtung gedreht wird, die Drehung jedoch unmittelbar vor dem Einlauf des Kabels in den Extruder in einer Zugvorrichtung aufgefangen wird, damit sie sich nicht weiter nach außen fortsetzt.

Denn es ist das Ziel bei der hier eingesetzten Vorrichtung, das Aufspleißen des verdrillten Kabels während des Vulkanisations- bzw. Vernetzungsvorganges zu vermeiden. Denn bei einem solchen Aufspleißen würden sich die einzelnen isolierten Leiter des Kabels lockern und die als Mantel aufgetragene Extrusionsmasse könnte unter Veränderung der gewünschten Kabeldimensionen in das Innere des Kabels eintreten. Durch die aufgebrachte Drehung wird dieses Aufdrehen der verdrillten Leiter des Kabels vermieden, wobei die dem Kabel aufgezwungene Verwindung nur im Bereich zwischen der Drehvorrichtung und der unmittelbar vor dem Extruder angeordneten Zugvorrichtung sich ausbilden kann, wobei die durch diese aufgezwungene Drehbewegung im Kabel wirksame Verwindung beim Durchlauf des Kabels durch das Vernetzungsrohr entlang der Achse des Kabels verschoben wird, so daß weder hinter der Drehvorrichtung beim Aufwickeln des ummantelten Kabels noch vor dem Einlauf des verdrillten, noch nicht ummantelten Kabels in die erste Zugvorrichtung etwas von dieser Verwindung bemerkbar ist. Die durch die Drehbewegung aufgezwungene Verwindung des Kabels wird somit beim Durchlauf des Kabels durch die Vorrichtung entlang dem Kabel verschoben, so daß das Kabel die Vorrichtung hinter der Drehvorrichtung mit annähernd dem gleichen Verdrillungsgrad verläßt, mit dem das Kabel in die Vorrichtung eingelaufen ist.

Dieses Verfahren ist überall dort anwendbar, wo die aufzutragenden Ummantelungen nur eine dünne Stärke aufweisen. Bei dünnen Ummantelungsstärken kommt es ja auch sehr wesentlich darauf an, daß möglichst wenig Ummantelungsmaterial in das Innere des Kabels eindringt. Will man einem elektrischen Leiter bzw. Leiterbündel eine stärkere Ummantelung im Extrusionsvorgang auftragen, ist es notwendig, dafür Sorge zu tragen, daß die Schwerkräfte den nach der Extrusion noch fließfähigen Kabelmantel nicht deformieren, bevor er vulkanisiert bzw. vernetzt ist. Es ist aus der DE-OS 19 33 043 bekannt, die nicht unterdrückbare Wirkung der Schwerkraft auf den aufgetragenen Kabelmantel dadurch zu kompensieren, daß man die ganze Vorrichtung mitsamt der die Abwicklung des unummantelten Kabels vornehmenden Station und der die Aufwicklung des ummantelten Kabels vornehmenden Station in eine Drehbewegung um die Achse des Kabels versetzt. Das führt zu einem gleichmäßig ummantelten Kabel, ist aber mit erheblichem Aufwand verbunden und schließt ein kontinuierliches Arbeiten aus, weil immer nur der auf einer Kabeltrommel befindliche Vorrat an unummantelten Kabel ummantelt werden kann und anschließend die Vorrichtung stillgesetzt werden muß, damit die Kabeltrommeln durch neue ersetzt werden können.

Bei der nicht veröffentlichten EP 0 405 066 A1 wird in kontinuierlicher Arbeitsweise die nicht unterdrückbare Wirkung der Schwerkraft auf den aufgetragenen Kabelmantel dadurch kompensiert, daß das Kabel durch eine Drehvorrichtung, die hinter der Vulkanisationsanlage angeordnet ist, gedreht wird.

Die Erfindung vermeidet die Nachteile des Standes der Technik. Es ist die Aufgabe der vorliegenden Erfindung, eine Möglichkeit der starkwandigen Ummantelung von Kabeln durch in einem Arbeitsvorgang aufgetragenes Extrudat bei kontinuierlichem Auftragen zu schaffen, bei dem das zu ummantelnde Kabel einwandfrei verdrillt bleibt.

Die Erfindung besteht darin, daß die vor der Ummantelung durch Umlenkung des Kabels gelockerte Verseilung durch die auf das Kabel vor oder hinter der Vulkanisier- oder Vernetzungsvorrichtung aufgebrachte Drehbewegung im Kabel durch die Extrusionsvorrichtung und die Umlenkvorrichtungen frei möglichst weit bis zur oder vor die Abwickelstelle durchtreten läßt.

Auf diese Weise gewinnt man die Möglichkeit, einen ausreichenden Drehwinkel zu erhalten, um die im viskosen Zustand aufgetragene starkwandige Ummantelung so weit zu drehen, daß durch die Drehbewegung der Schwerkraft soweit entgegengewirkt wird, daß eine gleichmäßige Ummantelungsstärke erreicht wird. Die ausreichende Drehbewegung wird dadurch erhalten, daß man im Gegensatz zu dem eingangs genannten bekannten Verfahren nach DE 27 26 767 die Verdrillung des Kabels erst lockert und dann wieder durch die am Kabelmantel angreifenden Drehkräfte schließt. Hierdurch wird ein einwandfrei verdrilltes Kabel mit einem starken, gleichmäßig dicken Mantel erhalten.

Die erfindungsgemäße Vorrichtung zeichnet sich nach Anspruch 1 dadurch aus, daß vor der Extrusionsvorrichtung eine Bremsvorrichtung für das Kabel angeordnet ist, daß die Bremsvorrichtung für eine Bremsung des Kabels in Achsrichtung ausgelegt ist, jedoch eine Drehbewegung des Kabels um seine Achse zuläßt.

Diese erfindungsgemäße Vorrichtung verwendet im Gegensatz zu der Zugvorrichtung des Standes der Technik unmittelbar vor dem Extruder (in Bewegungsrichtung des zu ummantelnden Kabels gesehen) eine Bremsvorrichtung, die das Kabel aber nur bei seiner Bewegung in der Achsrichtung bremst, der Drehbewegung des Kabels um seine Achse jedoch nicht entgegensteht. So kann sich die Drehbewegung durch die Bremsvorrichtung hindurch fortsetzen, wobei eine vor der Bremsvorrichtung angeordnete Umlenkvorrichtung eine Lockerung der Verseilung bewirkt. Somit ist ausreichend Länge für die Fortbewegung der Drehbewegung geschaffen, um das Kabel um solche Drehwinkel zu bewegen, die ausreichend sind, um den auf die noch fließfähige Ummantelung wirkenden Schwerkräfte entgegenzuwirken.

Vorteilhaft ist es, wenn man vor der Extrusionsvorrichtung das Kabel auf Vorrichtungen abstützt, die eine freie Drehung des Kabels um seine Achse zulassen.

So ist es zweckmäßig, durch Verminderung der Reibung in Seildrehrichtung, die Drehung und ihr Fortschreiten zu erleichtern, z.B. wenn die Bremsvorrichtung aus mindestens einem Rad besteht, dessen Umfang mit einer Vielzahl von Rollenpaaren zu bestücken, deren Achsen tangential zum Rad angeordnet sind. Eine derartige Bremsvorrichtung bremst lediglich in axialer Richtung, läßt jedoch eine Drehung des Kabels um die Achse zu. Entsprechend wird man Abstützvorrichtungen ausbilden, die vor der Extrusionsvorrichtung (in Förderrichtung des Kabels gesehen) angeordnet sind.

Um ein kontinuierliches Arbeiten zu ermöglichen, ordnet man einen Speicher an, der es gestattet, auf Kabeltrommeln angelieferte Seile oder Kabel miteinander zu verbinden, ohne den Produktionsgang zu stören. Die Drehbewegung läßt man in diesem Fall bis tief in den Speicher hinein verlaufen, dessen das Kabel mit ihrem Umfang halternde Räder jedoch zumindest teilweise nicht mehr am Umfang mit Rollen tangentialer Achsausrichtung versehen sind, um die Drehbewegung im Speicher abklingen zu lassen.

Um einen ausreichend weiten Drehwinkel im Bereich des Extruderspritzkopfes zu erhalten, ist es zweckmäßig, das mit der frischen Ummantelung versehene Kabel mehrmals um seine eigene Achse rotieren zu lassen. Dafür kann es zweckmäßig sein, eine weitere Drehvorrichtung im Bereich der Bremse anzuordnen, um die von der hinter dem Vernetzungs- bzw. Vulkanisationsrohr angeordneten Drehvorrichtung dem Kabel aufgezwungene Drehung fortzusetzen bis in den Kabelspeicher hinein.

Es kann auch zweckmäßig sein, kombinierte Dreh- und Bremsvorrichtungen und kombinierte Dreh- und Abzugsvorrichtungen vorzusehen.

Eine zweckmäßige Ausführungsform dieser kombinierten Dreh- und Bremsvorrichtungen bzw. dieser kombinierten Dreh- und Abzugsvorrichtungen ist eine solche, die jeweils durch ein Paar das Seil bzw. Kabel zwischen sich einschließenden motorisch angetriebenen Bändern gebildet wird, die in einem um die Kabel- bzw. Seilachse rotierenden Käfig angeordnet sind.

Dabei ist es zweckmäßig, wenn die hinter dem Vulkanisation-und Vernetzungsrohr angreifende Drehvorrichtung eine höhere Drehzahl als die vor diesem Rohr angeordnete Drehvorrichtung aufweist.

Die Erfindung wird durch das Verfahren gemäß Anspruch 14 durchgeführt.

Das Wesen der Erfindung ist nachstehend anhand eines in der Zeichnung schematisch dargestellten Ausführungsbeispieles näher erläutert. Es zeigen:
- Fig. 1: eine Seitenansicht der Vorrichtung,

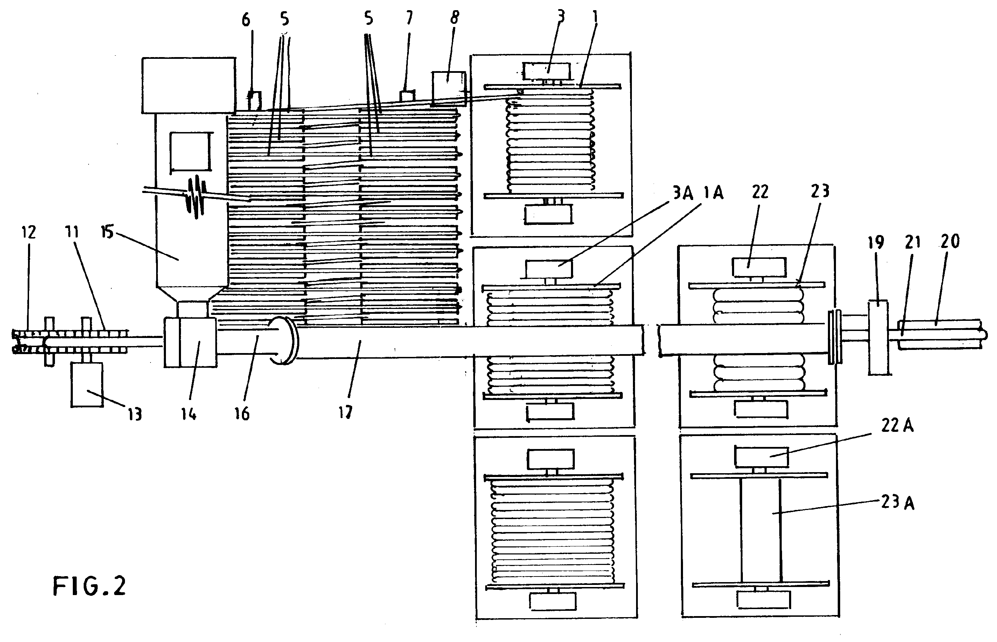

- Fig. 2: eine Draufsicht auf die Vorrichtung,
- Fig. 3: eine Alternativausführung der Vorrichtung in Seitenansicht,

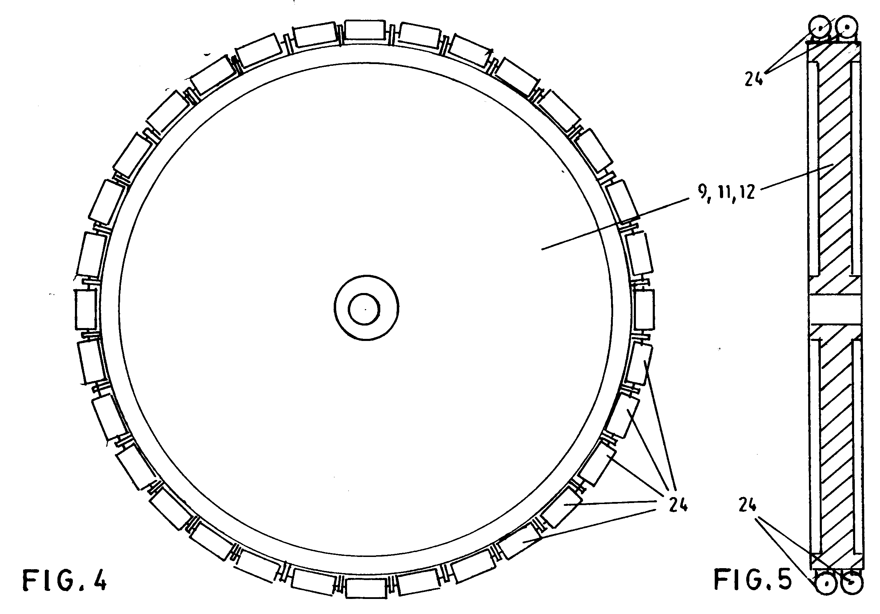

- Fig. 4: eine Seitenansicht der Bremse,
- Fig. 5: einen Querschnitt durch ein Bremsrad,
- Fig. 6: eine Seitenansicht einer anderen Vorrichtung mit kombinierter Dreh- und Bremsvorrichtung und kombinierter Dreh- und Abzugsvorrichtung.

Die Kabeltrommel 1 mit einem auf der Verdrillmaschine erzeugten, noch zu ummantelnden Seiles 2 ist auf den Abwickler 3 gesetzt, der das Seil 2 in einen Speicher 4 liefert, dessen Speicherräder 5 in einer Vielzahl nebeneinander auf zwei parallele Wellen 6, 7 gesetzt sind, von denen die Welle 6 in Pfeilrichtung hin- und herverschiebbar ist, so daß sie der Welle 7 beim Entleeren des Speichers genähert und von der Welle 7 beim Füllen des Speichers entfernt werden kann. Wenn nach Auslaufen eines Seilvorrates von einer Seiltrommel 1 das Seilende die Trommel verläßt, wird es in der Verbindungsstation 8 festgehalten, die Kabeltrommel 1 mitsamt dem Abwickler 3 gegen eine bewickelte Kabeltrommel 1A, die bereits auf dem Abwickler 3A befindlich ist, ausgetauscht, und der Seilanfang mit dem Seilende in der Verbindungsstation 8 verbunden.

Das Seil 2 wird nach dem Verlassen des Seilspeichers 4 über die Umlenkrolle 9 geführt und der Bremse 10 zugeführt, die zum Beispiel aus den Rädern 11, 12 bestehen kann, von denen das eine mit der steuerbaren Bremsvorrichtung 13 ausgestattet ist. Das Rad 11 der Bremse 10 dient dabei ebenfalls als Umlenkrad. Das Seil läuft von diesem Umlenkrad 11 der Bremse 10 in den Spritzkopf 14 ein, der aus einem oder mehreren Extrudern 15 mit dem Ummantelungsmaterial für das Seil 2 beschickt wird. Nach dem Verlassen des Spritzkopfes 14 durchläuft das nun ummantelte Kabel durch ein Teleskoprohr 16 in das Vulkanisier- bzw. Vernetzungsrohr 17 ein, das im Inneren eine Erwärmungsstrecke und eine Abkühlungsstrecke für eine trockene und/oder nasse Behandlung der Kabelummantelung aufweist. In diesem Vulkanisier- bzw. Vernetzungsrohr hängt das Kabel im freien Durchhang , ohne daß es die Wandungen des Rohres 17 berührt. Durch eine Schleuse 18 verläßt das Kabel mit vulkanisiertem bzw. vernetztem Mantel den Kühlabschnitt des Rohres 17 und durchläuft eine Drehvorrichtung 19, die am Kabelmantel angreift und dem Kabel eine Drehung in Richtung der Verdrillung der einzelnen isolierten Leiter des Kabels 2 gibt. Hinter der Drehvorrichtung 19 ist eine Abzugsvorrichtung 20 angeordnet, die entsprechend den Betriebsbedingungen steuerbar ist und die das mit der Ummantelung 21 versehene Kabel dem Aufwickler 22 zuführt, der die Kabeltrommel 23 dreht, auf die das abgezogene Kabel 2 mit der Ummantelung 21 aufgewickelt wird.

Die Räder 11, 12 der Bremse 10 sind ebenso wie das Umlenkrad 9 in besonderer Weise aufgebaut. Am Umfang tragen diese Räder 9,11, 12 Paare von Gleitelementen oder Rollen 24, deren Achsen tangential zum Umfangskreis der Räder 9,11,12 angeordnet sind. Auf diesen Rollen 24 liegt das Seil auf. Es kann sich frei um seine Achse drehen, wird aber in seiner axialen Fortbewegungsgeschwindigkeit durch die Drehgeschwindigkeit der Räder 9, 11, 12 bestimmt. Zweckmäßigerweise läßt man das Umlenkrad 9 frei laufen, während man dem Rad 11 eine steuerbare Bremsvorrichtung zuordnet, die die Einlaufgeschwindigkeit des Seiles 2 in den Spritzkopf 14 und das Vulkanisier- bzw. Vernetzungsrohr 17 bestimmt. Das Rad 12 dient als Gegenrad, um das Kabel an das mit der Bremsvorrichtung 13 versehene Rad 11 anzudrücken, damit das Seil 2 nicht auf dem Rad 11 der Bremse 10 rutschen kann.

Die Drehvorrichtung 19 greift am Kabelmantel 21 an und versetzt dadurch dem ganzen Kabel einen Drall in Richtung der Kabelverdrillung. Dieser Drall setzt sich durch das Vulkanisier- bzw. Vernetzungsrohr 17, durch das Teleskoprohr 16, durch den Spritzkopf 14 des Extruders 15 durch die Bremse 10 mit ihren Rädern 11, 12, über die Umlenkrolle 14 fort und endet irgendwo im Speicher 4. Durch diesen langen Weg, den der durch die Drehvorrichtung 19 aufgezwungene Drall durch das Kabel nimmt, wird erreicht, daß das Kabel im Teleskoprohr 16 und im Anfangsteil des Vulkanisier- bzw. Vernetzungsrohres 17 so weit verdreht wird, daß die unter dem Einfluß der Schwerkraft nach der Querschnittsform einer Birne strebende, noch fließfähige Masse die kreisförmige Außenkontur beibehält, die sie beim Verlassen des Spritzkopfes des Extruders hat. DEr hierfür notwendige ausreichende Drehwinkel wird durch den langen Weg erreicht, den der Drall im Bereich des Teleskoprohres 16 nehmen soll , weil sich dieser Drall bis in den Kabelspeicher 4 fortsetzen kann.

Umlenkstellen, wie sie am Umlenkrad 9 und am Bremsrad 10 auftreten, aber auch im Kabelspeicher 4 auftreten, haben an sich den Nachteil, daß sich an diesen Stellen die Verdrillung des Kabels lockert. Für die vorliegende Erfindung hat dieser vom Stande der Technik als nachteilig empfundene Umstand den Vorteil, daß der Drehwinkel, den jeder einzelne Kabelabschnitt im Teleskoprohr 16 ausführt, größer sein kann als ohne solche Lockerungen der Verdrillung. Da der Drall dem Kabel 2 hinter dem Vulkanisier- bzw. Vernetzungsrohr 17 aufgezwungen wird und dieser Drall sich bis in den Kabelspeicher 4 fortsetzt, ist die Verdrillung der isolierten Leiter des Kabels 2 im Spritzkopf 14 und im Teleskoprohr 16 besonders fest, weil hier zwischen dem Einlauf des Kabels in den Spritzkopf 14 und der Drehvorrichtung 19 kaum Hindernisse vorhanden sind, welche dem Zuziehen der Verdrillung entgegenstehen. Das Kabel kann unter Umständen im Kühlteil des Rohres schleifen und muß die in der Schleuse 18 entstehenden Reibungskräfte bei der Rotation überwinden. Das Kabel wird daher in einwandfrei verdrilltem Zustand im Spritzkopf 14 ummantelt und nach dieser Ummantelung so weit gedreht, daß die Schwerkräfte keinen Einfluß auf eine Verformung der Ummantelung haben, so lange diese noch nicht vernetzt bzw. vulkanisiert ist. Auf diese Weise gelingt es überraschend, eine dicke Ummantelungsschicht formgenau auf der durch die verdrillten Leiter gebildeten Kabelseele zu vulkanisieren bzw. zu vernetzen, wobei die Kabelseele einwandfrei und fest verdrillt im fertigen Produkt zentrisch liegt, obwohl zuvor auf dem Weg von der Abwickelstation zum Spritzkopf bewußt eine Lockerung der Verdrillung hingenommen werden mußte.

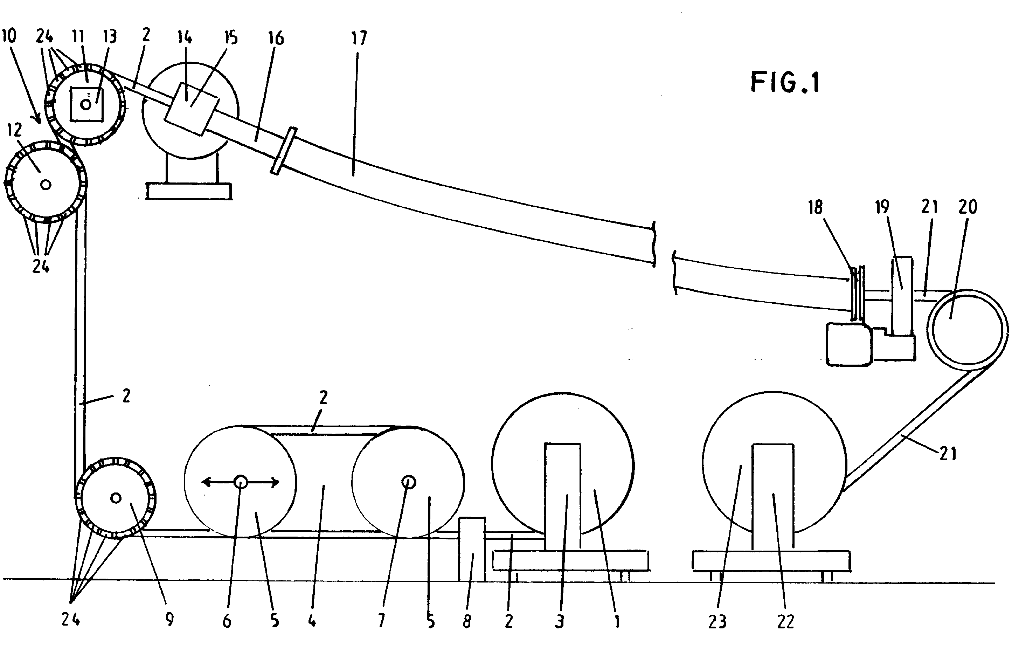

Dabei kann es zweckmäßig sein, wenn die Drehvorrichtung und die Abzugsvorrichtung eine Einheit bilden, wobei die am Kabelmantel angreifenden Drehwerkzeuge auf das Kabel auch in Abzugsrichtung wirken. Das ist durch die Drehvorrichtung 19 in Fig. 1 realisiert.

Im Versuchsbetrieb hat sich noch ein besonderes Problem herauskristallisiert: Die auf das Kabel wirkende Drehvorrichtung 19 übt eine Drehung nicht nur in Richtung auf die Abwickeltrommel, sondern auch in Richtung auf die Aufwickeltrommel auf das Kabel aus. Es stellte sich heraus, daß das ummantelte Kabel nicht spannungsfrei auf die Kabeltrommel aufgewickelt war, sondern eine erhebliche Verdrehung gegen die Drillrichtung aufwies. Bei einigen Kabelarten stellte sich heraus, daß das auf die Aufwickeltrommel aufgewickelte ummantelte Kabel im Inneren teilweise aufgespleißt war.

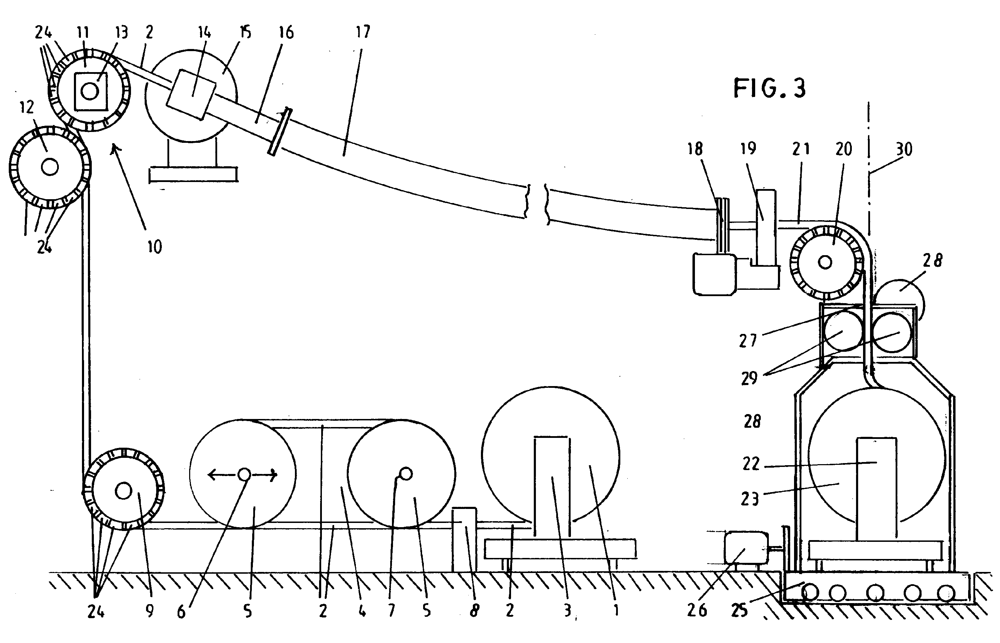

Dieser Nachteil läßt sich mit der alternativen Ausführungsform der Vorrichtung nach Fig. 3 beseitigen: Hier ist die dem Aufwickeln des ummantelten Kabels 2, 21 dienende Kabeltrommel 23 auf einem Drehtisch 25 zusammen mit ihrem Antrieb 26 aufgebaut, wobei die Kabelzuführung 27 vertikal in der Drehtischachse angeordnet ist. Der Drehtisch 25 wird durch einen in seiner Drehzahl regelbaren Motor 28 angetrieben, die Regelung erfolgt in Abhängigkeit von der durch die Drehvorrichtung 19 auf das Kabel 2, 21 aufgebrachten Drehung.

Vorteilhaft kann es sein, auch die Abzugsvorrichtung 29 für das Kabel 2, 21 ebenfalls auf dem Drehtisch 25 anzuordnen, vorzugsweise über der Kabeltrommel 23 und vorzugsweise zentrisch zur Drehtischachse 30.

Vorteilhaft ist es weiterhin, wenn auch die Umlenkräder 20 hinter der am Kabel 2, 21 angreifenden Drehvorrichtung 19 mit Rollen 24 am Umfang ausgestattet sind, deren Achsen tangential zum Umlenkrad 20 verlaufen.

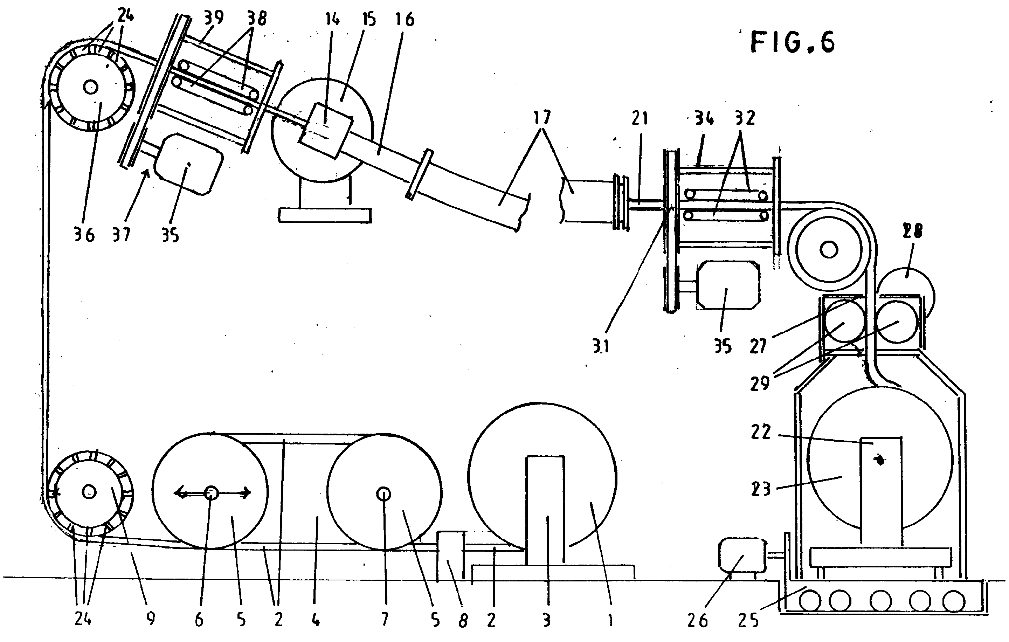

Im Ausführungsbeispiel der Fig. 6 ist eine kombinierte Dreh- und Abzugsvorrichtung 31 hinter dem Vulkanisier- bzw. Vernetzungsrohr 17 angeordnet, die aus zwei am Kabelmantel 21 angreifenden endlosen Bändern 32 besteht, die in einem rotierenden Käfig 34 angeordnet sind, welcher um die Achse des Kabels 2 rotiert. Dieser Käfig erhält seine Drehbewegung von einem Motor 35.

In diesem Ausführungsbeispiel ist hinter dem Umlenkrad 36, vor dem Spritzkopf 14 eine weitere Drehvorrichtung 37 angeordnet, welche mit der Bremsvorrichtung kombiniert ist. Diese Dreh- und Bremsvorrichtung 37 besteht aus zwei am Seil 2 angreifenden endlosen Bändern 38, die in einem rotierenden Käfig 39 angeordnet sind, der von einem weiteren Motor 35 angetrieben wird. Mit dieser Ausgestaltung der Vorrichtung lassen sich besonders weite Drehwinkel dem Kabel aufzwingen.

## Patentansprüche

1. Vorrichtung zur Ummantelung eines Seiles oder aus einer Vielzahl von Leitern verdrillten Kabels mit einer plastischen Schicht und zu deren Vulkanisation bzw. Vernetzung,
bestehend aus einer Extrusionsvorrichtung, einem an diese anschließenden Vulkanisier- bzw. Vernetzungsrohr, einer der Aufwickelvorrichtung zugeordneten Abzugsvorrichtung für das Kabel und einer zwischen der Abzugsvorrichtung und dem Vulkanisier- bzw. Vernetzungsrohr angeordneten Drehvorrichtung für das ummantelte Kabel,
dadurch gekennzeichnet,
daß vor der Extrusionsvorrichtung (14, 15) eine Bremsvorrichtung (10) für das Kabel (2) angeordnet ist, daß die Bremsvorrichtung (10) für eine Bremsung des Kabels (2) in Achsrichtung ausgelegt ist, jedoch eine Drehbewegung des Kabels (2) um seine Achse zuläßt,
und daß vor der Bremsvorrichtung (10) mindestens eine Umlenkvorrichtung (9, 11) angeordnet ist.

2. Vorrichtung nach Anspruch 1,
dadurch gekennzeichnet,
daß die Bremsvorrichtung aus mindestens einem Rad (11) besteht, dessen Umfang mit einer Vielzahl von Gleitelementen, z.B. Rollenpaaren (24), bestückt ist, deren Achsen tangential zum Rad (11) angeordnet sind.

3. Vorrichtung nach Anspruch 1,
dadurch gekennzeichnet,
daß die Umlenkvorrichtungen (9) aus Rädern bestehen, deren Umfang mit einer Vielzahl von Gleitelementen, z.B. Rollenpaaren (24), besetzt sind, deren Achsen tangential zum Rad (9) angeordnet sind.

4. Vorrichtung nach Anspruch 1,
gekennzeichnet durch
die Anordnung eines Kabelspeichers (4) mit einer Vielzahl von das Kabel umlenkenden und in Umfangsrillen halternden Rädern (6,7), welche vorzugsweise aber zumindest teilweise mit einer Vielzahl von Gleitelementen, z.B. Rollenpaaren (24) besetzt sind, deren Achsen tangential zu den Rädern (6,7) angeordnet sind.

5. Vorrichtung nach Anspruch 1,
dadurch gekennzeichnet,
daß die hinter dem Vulkanisier- bzw. Vernetzungsrohr (17) angeordnete Drehvorrichtung (19) am Kabelmantel angreifende Drehwerkzeuge aufweist.

6. Vorrichtung nach Anspruch 1,
dadurch gekennzeichnet,
daß die Drehvorrichtung und die Abzugsvorrichtung eine Einheit (19) bilden, wobei die am Kabelmantel angreifenden Drehwerkzeuge auf das Kabel auch in Abzugsrichtung wirken.

7. Vorrichtung nach Anspruch 1,
dadurch gekennzeichnet,
daß die dem Aufwickeln des Kabels dienende Kabeltrommel (23) auf einem Drehtisch (25) zusammen mit ihrem Antrieb (26) aufgebaut ist,
und daß die Kabelzuführung (27) vertikal, vorzugsweise in der Drehtischachse angeordnet ist.

8. Vorrichtung nach Anspruch 7,
dadurch gekennzeichnet,
daß die Abzugsvorrichtung (29) für das Kabel (2, 21) ebenfalls auf dem Drehtisch, vorzugsweise über der Kabeltrommel und vorzugsweise zentrisch zur Drehachse angeordnet ist.

9. Vorrichtung nach Anspruch 1,
dadurch gekennzeichnet,
daß auch die Umlenkräder (20) hinter der am Kabel angreifenden Drehvorrichtung (19) mit Rollen (24) am Umfang ausgestattet sind, deren Achsen tangential zum Umlenkrad verlaufen.

10. Vorrichtung nach Anspruch 1,
dadurch gekennzeichnet,
daß eine weitere Drehvorrichtung (37) im Bereich der Bremse angeordnet ist.

11. Vorrichtung nach Anspruch 1,
dadurch gekennzeichnet,
daß kombinierte Dreh- und Bremsvorrichtungen (37) und kombinierte Dreh- und Abzugsvorrichtungen (31) vorgesehen sind.

12. Vorrichtung nach Anspruch 11,
dadurch gekennzeichnet,
daß die kombinierten Dreh- und Bremsvorrichtungen (37) und/oder die kombinierten Dreh- und Abzugsvorrichtungen (31) jeweils durch ein Paar das Seil (2) bzw. Kabel (12, 21) zwischen sich einschließenden, motorisch angetriebenen Bändern 32, 38 gebildet sind, die in einem um die Kabel- bzw. Seilachse rotierenden Käfig (34, 39) angeordnet sind und am Kabelmantel bzw. am Seil angreifen.

13. Vorrichtung nach Anspruch 10,
dadurch gekennzeichnet,
daß die hinter dem Vulkanisations- und Vernetzungsrohr (17) angreifende Drehvorrichtung (31) eine höhere Drehzahl als die vor diesem Rohr (17) angeordnete Drehvorrichtung (37) aufweist.

14. Verfahren zur Ummantelung eines Seiles oder aus einer Vielzahl von Leitern bestehenden, verdrillten Kabels mit einer ein- oder mehrfachen Umhüllungsschicht und zu deren Vulkanisation und Vernetzung,
bei dem man das verdrillte Seil oder Kabel durch eine die ummantelnde Umhüllung aufbringenden Extrusionsvorrichtung führt,
und bei dem man anschließend das ummantelte Kabel durch eine Vulkanisier- oder Vernetzungsvorrichtung hindurchführt und es dabei um seine Achse ständig dreht,
indem man eine Drehvorrichtung hinter der Vulkanisations- und Vernetzungsvorrichtung am Kabel angreifen läßt,
dadurch gekennzeichnet,
daß man vor der Ummantelung die Verseilung durch Umlenkung des Kabels lockert,
und daß man die auf das Kabel hinter der Vulkanisier- oder Vernetzungsvorrichtung aufgebrachte Drehbewegung im Kabel durch die Extrusionsvorrichtung und die Umlenkvorrichtungen frei möglichst weit bis zur oder vor die Abwickel- oder Erzeugungsstelle durchtreten läßt.

15. Verfahren nach Anspruch 14,
dadurch gekennzeichnet,
daß man vor der Extrusionsvorrichtung das Kabel auf Vorrichtungen abstützt, die eine freie Drehung des Kabels um seine Achse zulassen.

16. Verfahren nach Anspruch 14,
dadurch gekennzeichnet,
daß man eine Vielzahl von Umlenkungen des Kabels in einem Speicher vornimmt.

17. Verfahren nach Anspruch 14,
dadurch gekennzeichnet,
daß man vor der Ummantelung des Kabels in seiner in Achsrichtung erfolgenden Bewegung bremst, ohne die Drehbewegung des Kabels um seine Achse wesentlich einzuschränken.

18. Verfahren nach Anspruch 14,
dadurch gekennzeichnet,
daß man die Drehbewegung des Kabels sich bis in den Speicher fortsetzen läßt.

## Claims

1. A device for covering a cable or a twisted electric cable composed of a plurality of conductors with a plastic coating and for the vulcanisation and/or cross-linking thereof, comprising an extrusion device, a vulcanising- and cross-linking pipe connected to said extrusion device, a withdrawal device for the cable assigned to the winding-up device, and a rotating device for the covered cable arranged between the withdrawal device and the vulcanising- and cross-linking pipe, characterised in that a braking device (10) for the cable (2) is arranged upstream of the extrusion device (14, 15), that the braking device (10) is designed to brake the cable (2) in the axial direction, but permits a rotational movement of the cable (2) about its axis, and that at least one deflecting device (9, 11) is arranged upstream of the braking device (10).

2. A device as claimed in Claim 1, characterised in that the braking device consists of at least one wheel (11), the periphery of which is equipped with a plurality of sliding elements, for example pairs of rollers (24), the axes of which are disposed tangentially to the wheel (11).

3. A device as claimed in Claim 1, characterised in that the deflecting devices (9) consist of wheels, the periphery of which is equipped with a plurality of sliding elements, for example pairs of rollers (24), the axes of which are disposed tangentially to the wheel (9).

4. A device as claimed in Claim 1, characterised by the arrangement of a cable reservoir (4) comprising a plurality of wheels (6, 7), by which the cable is deflected and held in peripheral grooves, and which preferably at least partially are equipped with a plurality of sliding elements, for example pairs of rollers (24), the axes of which are disposed tangentially to the wheels (6, 7).

5. A device as claimed in Claim 1, characterised in that the rotating device (19) arranged downstream of the vulcanising and cross-linking pipe (17) comprises rotating tools which act on the cable covering.

6. A device as claimed in Claim 1, characterised in that the rotating device and the withdrawal device form one unit (19), where the rotating tools which act on the cable covering also act on the cable in the withdrawal direction.

7. A device as claimed in Claim 1, characterised in that the cable drum (23), which serves to wind up the cable, is mounted on a turntable (25) together with its drive means (26), and that the cable supply (27) is disposed vertically, preferably in the turntable axis.

8. A device as claimed in Claim 7, characterised in that the withdrawal device (29) for the cable (2, 21) is likewise arranged on the turntable, preferably above the cable drum and preferably centrally in relation to the axis of rotation.

9. A device as claimed in Claim 1, characterised in that the deflecting wheels (20) downstream of the rotating device (19) which acts on the cable are likewise equipped with rollers (24) at their periphery, the axes of said rollers (24) extending tangentially to the deflecting wheel.

10. A device as claimed in Claim 1, characterised in that a further rotating device (37) is arranged in the region of the brake.

11. A device as claimed in Claim 1, characterised in that combined rotating- and braking devices (37) and combined rotating- and withdrawal devices (31) are provided.

12. A device as claimed in Claim 11, characterised in that the combined rotating- and braking devices (37) and/or the combined rotating- and withdrawal devices (31) are each formed by a pair of motor-driven belts (32, 38) which enclose the cable (2) or electric cable (12, 21) between themselves and which are arranged in a cage (34, 39) rotating about the axis of the cable or electric cable, and act on the covering of the cable or electric cable.

13. A device as claimed in Claim 10, characterised in that the rotating device (31) which operates downstream of the vulcanising and cross-linking pipe (17) exhibits a higher rotational speed than the rotating device (37) arranged upstream of this pipe (17).

14. A process for covering a cable or a twisted electric cable composed of a plurality of conductors with a single or multiple covering coating and for the vulcanisation and cross-linking thereof, wherein the twisted cable or electric cable is conducted through an extrusion device which applies the covering and wherein the covered cable is then conducted through a vulcanising or cross-linking device at which time it is continuously rotated about its axis in that a rotating device downstream of the vulcanising and cross-linking device is caused to act on the cable, characterised in that prior to the covering procedure the twisting is loosened by deflection of the cable, and that the rotational movement in the cable, which has been applied to the cable downstream of the vulcanising or cross-linking device, is caused to pass freely through the extrusion device and the deflecting devices to the furthest possible extent up to or prior to the unwinding- or production station.

15. A process as claimed in Claim 14, characterised in that upstream of the extrusion device the cable is supported on devices which permit a free rotation of the cable about its axis.

16. A device as claimed in Claim 14, characterised in that a plurality of deflections of the cable are carried out in a reservoir.

17. A process as claimed in Claim 14, characterised in that prior to the covering of the cable it is braked in its movement in the axial direction, without substantially limiting the rotational movement of the cable about its axis.

18. A process as claimed in Claim 14, characterised in that the rotational movement of the cable is caused to continue into the reservoir.

## Revendications

1. Installation pour le gainage d'un câble ou d'un câble formé par le torsadage d'une multiplicité de conducteurs, avec une couche plastique et pour la vulcanisation ou la réticulation de cette couche,
constituée par un dispositif d'extrusion, un tube de vulcanisation ou de réticulation raccordé au dispositif, un dispositif de tirage associé au dispositif d'enroulement pour le câble et un dispositif d'entraînement en rotation, disposé entre le dispositif de tirage et le tube de vulcanisation ou de réticulation et prévu pour le câble gainé,
caractérisée en ce
qu'en amont du dispositif d'extrusion (14,15) est disposé un dispositif de freinage (10) pour le câble (2),
que le dispositif de freinage (10) est conçu pour réaliser un freinage du câble (2) dans la direction axiale, tout en permettant un mouvement de rotation du câble (2) autour de son axe, et
qu'en amont du dispositif de freinage (10) est disposé au moins un dispositif de renvoi (9,11).

2. Installation selon la revendication 1,
caractérisée en ce
que le dispositif de freinage est constitué par au moins une roue (11), dont la périphérie est pourvue d'une multiplicité d'éléments de glissement, par exemple des couples de galets (24), dont les axes sont tangentiels à la roue (11).

3. Installation selon la revendication 1,
caractérisée en ce
que les dispositifs de renvoi (9) sont constitués par des roues, dont la périphérie est pourvue d'une multiplicité d'éléments de glissement, par exemple des couples de galets (24), dont les axes sont tangentiels à la roue (9).

4. Installation selon la revendication 1,
caractérisée par
l'utilisation d'un accumulateur (4) pour le câble, comportant une multiplicité de roues (6,7), qui sont cependant occupées de préférence au moins en partie par une multiplicité d'éléments de glissement, par exemple des couples de galets (24), dont les axes sont tangentiels aux roues (6,7).

5. Installation selon la revendication 1,
caractérisée en ce
que le dispositif d'entraînement en rotation (19), disposé en aval du tube de vulcanisation ou de réticulation (17), comporte des outils d'entraînement en rotation, qui s'appliquent contre la gaine du câble.

6. Installation selon la revendication 1,
caractérisée en ce
que le dispositif d'entraînement en rotation et le dispositif de tirage forment une unité (19), les outils d'entraînement en rotation, qui s'appliquent contre la gaine du câble, agissant également sur le câble dans la direction de tirage.

7. Installation selon la revendication 1,
caractérisée en ce
que le tambour à câble (23), qui est utilisé pour l'enroulement du câble, est monté sur un plateau rotatif (25) conjointement avec son dispositif d'entraînement (26), et
que le dispositif (27) d'amenée du câble est disposé verticalement, de préférence sur l'axe du plateau rotatif.

8. Installation selon la revendication 7,
caractérisée en ce
que le dispositif de tirage (29) pour le câble (2,21) est également disposé sur un plateau rotatif, de préférence par l'intermédiaire du tambour à câble et de préférence d'une manière centrée par rapport à l'axe de rotation.

9. Installation selon la revendication 1,
caractérisée en ce
que les roues de renvoi (20), situées en aval du dispositif d'entraînement en rotation (19) qui agit sur le câble, sont également équipées, sur leur périphérie, de galets (24), dont les axes sont tangentiels à la roue de renvoi.

10. Installation selon la revendication 1,
caractérisée en ce
qu'un autre dispositif d'entraînement en rotation (37) est disposé au voisinage du frein.

11. Installation selon la revendication 1,
caractérisée en ce
qu'il est prévu des dispositifs combinés d'entraînement en rotation et de freinage (37) et des dispositifs combinés d'entraînement en rotation et de tirage (31).

12. Installation selon la revendication 11,
caractérisée en ce que
les dispositifs combinés d'entraînement en rotation et de freinage (37) et/ou les dispositifs combinés d'entraînement en rotation et de tirage (31) sont formés respectivement par un couple de bandes (32,38), qui sont entraînées par un moteur, enserrent entre elles le câble (2) ou le câble (12,21) et sont disposées dans une cage (34,39), qui tourne autour de l'axe du câble, et s'appliquent sur la gaine du câble ou sur le câble.

13. Installation selon la revendication 10,
caractérisée en ce
que le dispositif d'entraînement en rotation (31), qui agit en aval du tube de vulcanisation et de réticulation (17), possède une vitesse de rotation supérieure à celle du dispositif d'entraînement en rotation (37) disposé en amont de ce tube (17).

14. Procédé de gainage d'un câble ou d'un câble torsadé constitué par une multiplicité de conducteurs, avec une ou plusieurs couches de gainage, et de vulcanisation et de réticulation de ces couches,
selon lequel on fait passer le câble torsadé dans un dispositif d'extrusion qui applique la gaine enveloppante, et
selon lequel on fait passer ensuite le câble gainé à travers un dispositif de vulcanisation ou de réticulation et on l'entraîne en rotation de façon permanente autour de son axe,
en faisant agir sur le câble un dispositif d'entraînement en rotation en aval du dispositif de vulcanisation et de réticulation,
caractérisé en ce
qu'avant le gainage, on relâche le torsadage en faisant subir au câble un renvoi, et
qu'on laisse se poursuivre, dans le câble, le mouvement de rotation appliqué au câble en aval du dispositif de vulcanisation ou de réticulation, aussi librement que possible, à travers le dispositif d'extrusion et les dispositifs de renvoi, jusqu'au point de déroulement ou de production ou en amont de ce point.

15. Procédé selon la revendication 15,
caractérisé en ce qu'en amont du dispositif d'extrusion, le câble est soutenu dans des dispositifs qui permettent une libre rotation du câble autour de son axe.

16. Procédé selon la revendication 14,
caractérisé en ce
qu'on réalise une multiplicité de renvois du câble dans un accumulateur.

17. Procédé selon la revendication 14,
caractérisé en ce
qu'avant le gainage du câble, on le freine dans son déplacement dans la direction axiale, sans limiter de façon conséquente le mouvement de rotation du câble autour de son axe.

18. Procédé selon la revendication 14,
caractérisé en ce qu'on laisse se poursuivre le mouvement de rotation du câble jusque dans l'accumulateur.
